# EUROPEAN PATENT SPECIFICATION

(11) **EP 4 320 455 B1**
(45) Date of publication and mention of the grant of the patent: **29.04.2026**
(21) Application number: 22718403.3
(22) Date of filing: 30.03.2022
(51) Int. Cl.: G01S 5/02, G01S 19/53, E02F 9/20, E02F 9/26

(54) **METHODS AND SYSTEMS FOR DETERMINING MACHINE STATE**
VERFAHREN UND SYSTEME ZUR BESTIMMUNG DES MASCHINENZUSTANDS
PROCÉDÉS ET SYSTÈMES POUR DÉTERMINER L'ÉTAT D'UNE MACHINE

(30) Priority: 09.04.2021 US 202117226635
(43) Date of publication of application: 14.02.2024
(73) Proprietor: Caterpillar Inc., Peoria, IL 61629-9510 (US)
(72) Inventor: HOBBS, Benjamin D., Dunlap, Illinois 61525 (US); THEES, Carsten, Akashi-shi, 673-0016 (JP); SCHLOSS, Russell A., Pittsburgh, Pennsylvania 15206 (US)
(74) Representative: Novagraaf Group
(86) International application number: PCT/US2022/022502
(87) International publication number: WO 2022/216493

(56) References cited:
- US-A1- 2005 197 755
- US-A1- 2021 010 245

## Description

### Technical Field

The present disclosure relates generally to determining machine state, and, more particularly, to methods and systems for determining orientation and/or position of a machine by fusing data generated by a plurality of on-machine sensors.

### Background

Facilitating some earth working activities (e.g., mining, construction, dredging, excavating, or the like), including remotely-controlled and/or autonomous activities, may require information about machine position and/or orientation. For example, some computer-aided excavation operations require that a machine be localized, e.g., in an environment, and/or that an orientation of the machine be determined, prior to and/or during excavation. Conventionally, such localization and/or orientation determination may be based on global positioning sensors, including GNSS (global navigation satellite system) sensors. For instance, some conventional applications use two GNSS sensors coupled to a portion of a body at known, spaced locations on that portion. The portion to which the sensors are coupled moves relative to one or more other portions of the body. Global positions from the two GNSS sensors (and their relationship to the body of the machine) will provide a position and orientation, or heading, of the machine. However, outfitting machines, especially fleets of machines, with two GNSS sensors is expensive. Accordingly, it may be desirable to provide a system that uses a single GNSS sensor, and that leverages data from other sensors, to determine an accurate position and/or orientation of a vehicle.

Systems have been designed with a view toward attempting to determine relative positions of machine implements and/or components. For example, Patent Publication GB2571004A to Neyer et al. ("the '004 Publication") describes systems and methods for controlling a mobile machine using various sensor modalities. For instance, the '004 publication describes outfitting a mobile working machine with displacement sensors, angle sensor, inertial sensors, rotation rate sensors and acceleration sensors, as well as one or more cameras, to determine a position of a manipulator arm.

While the system described in the '004 Publication may include sensors for determining aspects of a work machine, the '004 Publication does not describe many of the techniques for determining a machine state, such as an orientation of the machine detailed herein.

The present disclosure is directed to one or more improvements in the existing technology.

US 2021/010245 discloses a method for estimating a yaw (or heading) of a rotating body of a machine.

US 2005/197755 discloses a multi-source positioning system for a work machine.

### Summary

An example machine useful for understanding the disclosure includes a lower frame configured to move along a surface; an upper frame rotatable relative to the lower frame; a first sensor configured to measure an angular orientation of the upper frame relative to the lower frame; a global navigation satellite system (GNSS) sensor coupled to the upper frame and configured to sense a global position; one or more processors; and memory storing executable instructions. When executed by the one or more processor, the instructions cause the machine to perform actions including: receiving, from the first sensor, a first input indicating a first angular orientation of the upper frame relative to the lower frame at a first time; receiving, from the first sensor, a second input indicating a second angular orientation of the upper frame relative to the lower frame at a second time; receiving, from the GNSS sensor, a first global position associated with the first time and a second global position associated with the second time; and determining, based at least in part on the first input, the second input, the first global position, and the second global position, an orientation of the machine.

According to this disclosure a system according to claim 1 is provided.

An example method of determining an orientation of a machine useful for understanding the disclosure, includes: receiving, from a rotation sensor, sensor data indicating a rotation of an upper frame of the machine relative to a lower frame of the machine; determining, based at least in part on the sensor data and a location of a three-dimensional position sensor, an estimated arc of the three-dimensional position sensor; receiving, from the three-dimensional position sensor, a plurality of global positions; and determining, based at least in part on the plurality of global positions and the estimated arc, an orientation of the machine.

### Brief Description of the Drawings

FIG. 1 is a representation of an exemplary environment for determining location and/or orientation of a machine, according to aspects of this disclosure.
FIG. 2 is a schematic illustration of an example of determining a location and/or an orientation of a machine using a single three-dimensional position sensor and sensor data from a rotational sensor, according to aspects of this disclosure.
FIG. 3 is a representation of the example of FIG. 2, according to aspects of this disclosure.
FIG. 4 is a schematic illustration of another example of determining a location and/or an orientation of a machine, according to aspects of this disclosure.
FIG. 5 is a schematic illustration of yet another example of determining a location and/or an orientation of a machine, according to aspects of this disclosure.
FIG. 6 is an example computing environment for determining a location and/or an orientation of a machine, according to aspects of this disclosure.
FIG. 7 is a flowchart of an example method for determining a location and/or an orientation of a machine and controlling the machine based on the location and/or the orientation, according to aspects of this disclosure.

### Detailed Description

This disclosure generally relates to methods, systems, and techniques for determining machine state. While specific parts described herein may be parts on machines, e.g., ground-engaging machines, earth-moving machines, or the like, the techniques described herein may be applicable to any number of other machines. Where possible, the same reference numerals are used through the drawings to refer to the same or like features.

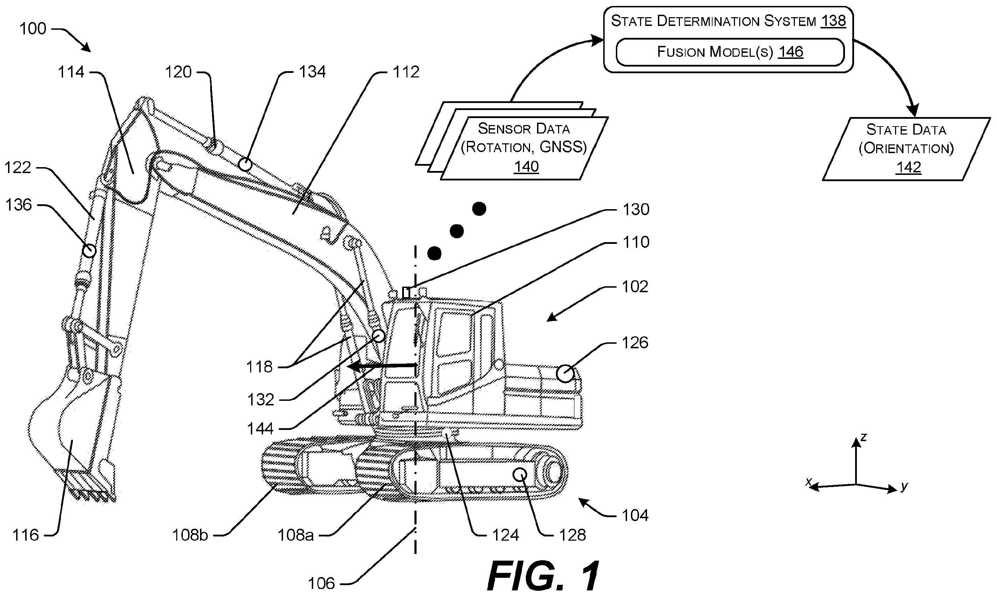

FIG. 1 depicts an example of a machine 100 that implements state determination techniques according to aspects of this disclosure. The machine 100 is depicted as an excavator, generally including a number of parts and components movable relative to each other, e.g., to move the machine 100, to perform tasks with the machine 100, or the like. In more detail, the machine 100 illustrated in FIG. 1 includes an upper portion or upper frame 102 coupled to, and movable relative to, an undercarriage, lower portion, or lower frame 104. In specific examples of this disclosure, the upper frame 102 is configured to rotate relative to the lower frame 104, e.g., about a axis 106 extending through a center of rotation of the upper frame 102. As illustrated, the axis 106 is generally aligned in a vertical, or z-direction. As detailed further herein, aspects of this disclosure include quantifying this relative rotation and using this quantification, along with other data, to determine a state, e.g., an orientation and/or position, of the machine 100.

As illustrated in FIG. 1, the lower frame 104 is supported on or otherwise coupled to a first track 108a and a second track 108b, collectively referred to herein as "the tracks 108." The tracks 108 are movable, e.g., independently, to propel the machine 100 along a ground surface, which may lie generally in the x-y plane in FIG. 1. The two tracks may be independently controllable to facilitate movement, e.g., rotation, translation, and the like, of the lower frame 104 (and therefore the machine 100) relative to the ground surface. In some examples, the tracks 108 may be hydraulically actuated. Movement of the machine 100 along the ground surface, e.g., in the x-y plane, via the tracks 108 results in changing positions and orientations of the machine 100. Although the tracks 108 are illustrated as including two tracks, in other implementations the machine 100 may include more or fewer tracks. Moreover, the machine 100 is not limited to using tracks. For instance, and without limitation, the machine 100 can also or alternatively include wheels instead of, or in addition to, the tracks 108.

The upper frame 102 is coupled to the lower frame 104 and is rotatable relative to the lower frame 104, as noted above. As shown in FIG. 1, a cab 110 is supported on the upper frame 102. In examples, the cab 110 may be sized to house an operator of the machine 100, e.g., to allow the operator to control the machine 100 to perform one or more tasks. In these instances, the cab 110 may house one or more user controls, such as joysticks, touchscreen displays, steering wheels, levers, or the like, user feedback devices, e.g., displays, gauges, or the like, and/or any other features. Moreover, and although not illustrated in FIG. 1, the cab 110 may further house control-related systems and components of the machine 100, including but not limited to computing systems, electrical systems, mechanical systems, hydraulic systems, or the like. The upper frame 102 may also support one or more power sources (not shown), e.g., an engine, one or more batteries, or the like, configured to supply power for operation of the machine 100, including, for example, to operate work implements, electronics, and steering, and/or for supplying torque to drive the tracks 108 to propel the machine 100 across the terrain. Without limitation, the power source(s) can also include a hydraulic system that controls operation of the tracks 108 and/or implements and other aspects of the machine 100 via hydraulic fluid flow.

As noted above, the machine 100 can be embodied as an excavator, and may include a boom 112, a stick 114, and a bucket 116. As in conventional machines, the boom 112 is coupled to and configured to move relative to the upper frame 102, the stick 114 is coupled to and configured to move relative to the boom 112, and the stick 114 is coupled to and configured to move relative to the stick 114. In the illustrated example, a pair of first hydraulic actuators 118 are provided to move the boom 112 relative to the upper frame 102. A second hydraulic actuator 120 is provided to move the stick 114 relative to the boom 112, and a third hydraulic actuator 122 is provided to move the bucket 116 relative to the stick. For example, and without limitation, the hydraulic actuators 118, 120, 122, may be controlled to facilitate completion of tasks, e.g., digging tasks, with the machine 100. In other examples, the machine 100 may include other and/or additional implements. For instance, the bucket 116 may be replaced with a different implement coupled to the stick 114. In still other instances, the machine 100 can include implements other than the boom 112 and the stick 114. Moreover, other and/or additional actuators may be used to control the implements, e.g., instead of the hydraulic actuators 118, 120, 122.

The machine 100 also includes a number of sensors, which are shown schematically in FIG. 1. Specifically, FIG. 1 illustrates a rotational sensor 124 configured to generate sensor data associated with a movement of the upper frame 102 relative to the lower frame 104, e.g., about the axis 106. Without limitation, the rotational sensor 124 may be or include one or more of a rotary potentiometer, a magnetic Hall effect sensor, one or more encoders, an inductive position sensor, a differential transformer, or the like. The rotational sensor 124 may be configured to determine an angle of the upper frame 102 relative to the lower frame 104, e.g., relative to a reference axis or plane. In some examples, the rotational sensor 124 may generate data that allows for calculating a rotation of the upper frame 102 relative to the lower frame 104 to an accuracy of about 0.1 degrees or less. As detailed further herein, techniques according to this disclosure use sensor data generated by the rotational sensor 124 to determine state information, e.g., orientation and/or position information of the machine 100.

The machine 100 also includes a position sensor 126. The position sensor 126 is configured to determine a position, e.g., a two- or three-dimensional global or local position, of the position sensor 126. In some examples, the position sensor 126 may be a Global Navigation Satellite System (GNSS) device, although other position sensors are contemplated, including but not limited to a Machine Target position sensor, a robotic total station, a robotic tracking station, and other types of sensor systems. In the example of FIG. 1, the position sensor 126 is coupled to the upper frame 102 of the machine 100, and the position sensor 126 may be a GNSS device or other conventional global positioning device that generally determines and outputs a global position of the device at regular intervals (e.g., at a frequency of 10Hz, or 10 outputs per second). The GNSS device may output a two- or three-dimensional coordinate of the GNSS device, e.g., in a global coordinate system. The position of the GNSS device will have some error, as is conventionally known. The GNSS device, as the position sensor 126 in this example, is disposed at a location that is spaced from the center-of-rotation of the machine, e.g., spaced from the axis 106. Accordingly, the GNSS device will move as the machine 100 moves along the ground, and when the upper frame 102 rotates relative to the lower frame 104, e.g., in the absence of translational motion. As detailed further herein, techniques according to this disclosure use position data generated by the GNSS device to determine orientation and position information of the machine 100. Moreover, unlike some previous systems, the techniques described herein can determine accurate state information with data from only a single position sensor, e.g., a single GNSS device. While the machine 100 may include one or more additional position sensors, including but not limited to additional GNSS devices, such may not be required according to implementations described herein.

In addition to the rotational sensor 124 and the positional sensor 126, the machine 100 can also include additional sensors. For example, FIG. 1 schematically illustrates a track sensor 128. The track sensor 128 is shown as being associated with the first track 108a, but another track sensor, like the track sensor 128, may also be associated with the second track 108b. The following discussion is generally associated with the first track 108a, but may apply to the second track 108b, as well. Generally, the track sensor 128 is configured to generate information about movement of the first track 108a. For example, the track sensor 128 may detect a movement (and a displacement associated with that movement) of the first track 108a. In other examples, the track sensor 128 may detect an extent of a rotation associated with a sprocket, an axle, or other mechanism used to drive the first track 108a. In other examples, the track sensor 128 may sense fluid flow, e.g., associated with fluid used to drive the tracks 108. In further examples, the track sensor 128 may be, or be a part of, a track sensing system that determines movement of both the first track 108a and the second track 108b. As detailed further herein, information associated with movement of the tracks 108 may be used to determine a state of the machine 100.

Other techniques and systems for determining movement of the tracks also are contemplated. For example, track movement may be inferred from control signals used to move the machine 100. For example, such control signals may be generated in response to an operator input, e.g., from an operator in the cab 110, from a remote operator, and/or from a computing device acting as an operator (e.g., in an autonomous system). In these examples, the track sensor 128 may be configured to generate information associated with these signals, and an actual movement of the tracks 108, and thus of the machine 100, may be inferred from the signals. For example, and without limitation, the track sensor 128 may detect a physical displacement of a user control, such as a joystick steering wheel, or the like, or may identify control signals, e.g., electrical signals, generated in response to such movements.

The machine 100 can also include one or more imaging and/or ranging sensors, schematically depicted in FIG. 1 as a sensor 130. For example, the sensor 130 may located at a position coupled to the upper frame 102 to generate data about an environment of the machine 100. In the example illustrated, the sensor 130 is mounted to a roof of the cab 110. The sensor 130 may be mounted on the roof to provide an unobstructed field of view, but other positions also are contemplated. For instance, the sensor 130 may image the environment, including objects in the environment. In some examples, a sufficient number of sensors may be provided to image a predetermined area around the machine 100. A sufficient number of sensors may be provided to generate sensor data associated with a 360-degree field of view around the machine, in some instances. Without limitation, the sensor 130 may include one or more of a camera or other imaging device, a LiDAR sensor, a radar sensor, a sonar sensor, a time-of-flight sensor, and/or the like. Although the sensor 130 is illustrated as a singular sensor, multiple instances of the sensor 130 may be provided, and such instances may be of the same or different modalities. Sensor data generated by the sensor 130 may be used to determine a state of the machine 100 according to techniques described herein.

The machine 100 may also include implement sensors, e.g., for generating information associated with implements of the machine. In the example of FIG. 1, the machine 100 includes a first implement sensor 132, a second implement sensor 134, and a third implement sensor 136. More specifically, the first implement sensor 132 generates sensor data associated with movement of the boom 112 relative to the upper frame 102, the second implement sensor 134 generates sensor data associated with movement of the stick 114 relative to the boom 112, and the third implement sensor 136 generates sensor data associated with the movement of the bucket 116 relative to the stick 114. In some examples, the first implement sensor 132 may be associated with one or both of the first hydraulic actuators 118, the second implement sensor 134 may be associated with the second hydraulic actuator 120, and/or the third implement sensor 136 may be associated with the third hydraulic actuator 122. Without limitation, one or more of the first implement sensor 132, the second implement sensor 134, and/or the third implement sensor 136 may be configured to determine linear displacement of the respective first hydraulic actuator(s) 118, second hydraulic actuator 120, and/or third hydraulic actuator 122. For example, the linear displacement can be used to determine a movement based on a known kinematic relationship of the various elements of the implement. In other implementations, the implement sensors 132, 134, 136 may measure other than a linear displacement. Without limitation, one or more of the implement sensors 132, 134, 136, may be configured to detect relative rotational movement, e.g., at a pin or other pivot location. In still further examples, the implement sensors 132, 134, 136 may be configured to detect three-dimensional motion of the associated components, e.g., the boom 112, stick 114, and/or bucket 116 regardless of relative motion. For instance, one or more of the implement sensors 132, 134, 136 may be inertial measurement units (IMUs). In other examples, the implement sensors 132, 134, 136 can include displacement sensors, positional sensors, angle sensors, rotational sensors, accelerometers, or any other sensor from which motion can be quantified, derived, inferred, or the like. Although the machine 100 is shown equipped with the sensors above, other types and units of sensors are also contemplated.

As noted above, the machine 100 is used to perform one or more tasks. Such tasks may include moving the machine 100, e.g., via the tracks 108, to various locations and/or operating the bucket 116 (via the boom 112 and/or the stick 114) to dig, grade, or the like. Tasks may also include or require rotating of the upper frame 102 (and therefore the cab 110, the boom 112, the stick 114, and the bucket 116) relative to the lower frame 104. In some examples, the tasks can be performed in response to instructions from a human operator, e.g., sitting in the cab 110. Without limitation, the human operator can operate the machine 100 using a lever, joystick, touchscreen or other type of control. The operator can also use input commands that correspond to different types of functions, operations, or events, such as "stick-in" events, "stick-out" events, "boom-up" events, "boom-down" events, "bucket-curl" events, "bucket-dump" events, or any other event associated with movement of one or more components of the machine 100.

FIG. 1 also illustrates a state determination system 138 associated with the machine 100. The state determination system 138 may be implemented by a computing system or computing device, including a computing device on-board the machine 100 or an off-board computing device. The state determination system 138 includes functionality to receive sensor data 140 and determine information about the state of the machine 100, e.g., as state data 142. As used herein, the term "state" may refer to any characteristic or property associated with the machine 100. In specific examples, the state determination system 138 can determine a position (e.g., in a global coordinate system) and/or orientation of the vehicle. A machine state can also or alternatively include one or more of a heading, an attitude, a velocity, an acceleration, and/or any other feature or characteristic of the machine 100. As described further below, the state determination system 138 includes one or more fusion models 146.

The sensor data 140 can include the data generated by any of the sensors associated with the machine 100, as detailed above. Without limitation, the sensor data 140 may include rotational data generated by the rotational sensor 124, e.g., as angular displacements of the upper frame 102 relative to the lower frame 104. The sensor data 140 may also include positions, such as global positions, generated by the position sensor 126, e.g., as positions of a GNSS sensor in a global coordinate system. The sensor data 140 may also include track data generated by the track sensor 128 (and/or any additional track sensors as detailed above). Furthermore, the sensor data 140 may include environmental data generated by the sensor 130 and/or the implement sensors 132, 134, 136. The sensor data 140 may also include information from other than the sensors illustrated in FIG. 1. For instance, the sensor data 140 can also include information about operator commands that were issued by the operator of the machine 100 to move the machine 100 and/or portions of the machine 100. In examples, the sensor data 140 may also include time data, e.g., as timestamps, tags, headers, or the like, e.g., to allow a computing system, like the state determination system 138 or some remote computing system to retrieve data from

As illustrated in FIG. 1, the state determination system 138 can include one or more fusion models 146. As used herein, "fusion model" refers to a mathematical model, an algorithm, a trained model and/or other processing component(s) that determine state data from a plurality of data inputs. For example, the fusion model(s) 146 are executable to determine the state data 142 from the sensor data 140 generated from various of the sensors mounted on the machine 100. For example, the fusion model(s) 146 may process the varied inputs, e.g., the sensor data 140 just described, and estimate the state data 142 using these inputs. In some examples, individual of the fusion model(s) 146 may be used to determine different state parameters, e.g., orientation, velocity, acceleration, or the like. In other examples, individual of the model(s) 146 may also be provided based on the type of the sensor data 140 received. In examples, and as detailed further herein, the fusion model(s) 146 can include estimation models, probability models, trained models, or the like, that process the sensor data 140 to estimate the state data 142.

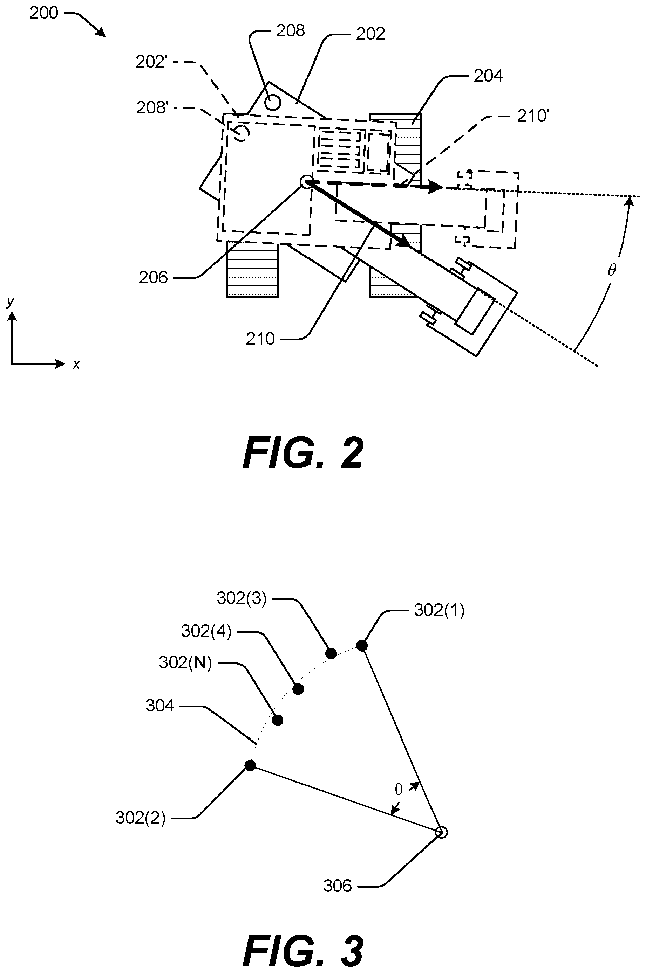

In some examples, one of the fusion model(s) 146 may be configured to estimate a center of rotation of the machine 100 using position data from the position sensor 126 and rotational data from the rotational sensor 124. For instance, and as detailed further below in connection with FIGS. 2 and 3, the fusion model(s) 146 may generate estimates for a center of rotation of the machine 100 from a plurality of instances of global positions generated by the position sensor 126 and fuse those estimates with a measured angular displacement from the rotational sensor 124 to determine a center of rotation that is more accurate than otherwise available from the position sensor alone. As noted above, the rotational sensor 124 determines an angular displacement of the upper frame 102 relative to the lower frame 104 about the center of rotation, e.g., about the axis 106, with an accuracy greater than the positions generated by the position sensor 126. The fusion model(s) 146 may leverage this higher fidelity rotational data to determine a more accurate location of a center of rotation, and more accurately determine the position and orientation of the machine 100. Moreover, the techniques described herein can determine the state data without the need for elaborate calibration steps. For example, fusing the data from the rotational sensor 124 with the position data may allow for an accurate determination of the state data 142 during normal use of the machine 100. Stated differently, a calibration routine may be partially- or wholly-obviated according to the techniques described herein.

Although FIG. 1 shows the state determination system 138 as including only the fusion model(s) 146, the state determination system 138 may include additional components. Without limitation, the state determination system 138 may include functionality to process inputs. For example, the state determination system 138 may include functionality to validate the input sensor data 140. For example, the state determination system 138 can identify and remove unreliable data, which may include data that does not conform to certain latency, fidelity, or other requirements. The state determination system 138 may also include functionality to filter data, e.g., by time, source, or the like. For example, the state determination system 138 may identify sensor data associated with a time period during which the machine 100 is moving, during an immediately-preceding time period (such as the preceding second, 10 milliseconds, or the like) and pass only those inputs into the fusion model(s) 146. The state determination system 138 may also process the input sensor data 140 to generate data to be passed to the fusion model(s) 146. For example, the state determination system 138 may receive image data and may process the image data to identify features, such as edges, corners, or the like. Other functionality of the state determination system 138 also will be appreciated from the description. In examples, any processing included in determining the state data 142 from the sensor data 140 (and/or other data, as described further herein) may be performed by the state determination system 138. In other instances, some or all of the functionality described herein may be performed by different components.

The state data 142 may include any information about the machine 100 state, as discussed above. **In** some examples, the state data 142 may include a two- or three-dimensional vector indicative of the relative position and orientation of the machine 100. An example of a machine orientation vector 144 is shown in FIG. 1. The machine orientation vector 144 may originate at a point on the axis 106, e.g., at a center of rotation of the upper frame 102 relative to the lower frame 104, and may have direction corresponding to a front of the upper frame 102. **In** other examples, the direction of the machine orientation vector 144 may correspond differently to the machine 100 and/or a component of the machine 100. Also in examples, the machine orientation vector 144 can have other associated data, including but not limited to a velocity, an acceleration, a confidence metric, and/or other state information.

As just described, data associated with the machine 100 can be used to determine the state data 142, e.g., via the state determination system 138 implementing the fusion model(s) 146. Examples of determining the state data 142 according to techniques described herein are detailed below with reference to FIGS. 2-5.

More specifically, FIG. 2 is a schematic representation of a machine 200, which may be the machine 100, performing a task that requires rotation, e.g., of an upper frame 202 relative to a lower frame 204 about a center of rotation 206. In this example, the upper frame 202 may correspond to the upper frame 102 of the machine 100, the lower frame 204 may correspond to the lower frame 104, and the center of rotation 206 may be coincident with an axis of rotation, such as the axis 106. Also shown in FIG. 2 is a GNSS sensor 208, which may be an example of the position sensor 126 discussed above in connection with FIG. 1. In the illustrated example, the lower frame 204 does not move relative to the ground, e.g., there is no track motion. The machine 100 may be removing earth with the bucket from a first location, and rotating to dump the bucket, e.g., at a second location.

FIG. 2 specifically shows a first machine position in solid lines and a second machine position in dashed lines. In the first machine position, the upper frame 202 has a first rotational position about the center of rotation 206 and, in the second machine position, the upper frame 202' has a different rotational position about the center of rotation. As will be appreciated, the first rotational position is associated with a first time and the second rotational position is associated with a second time, after the first time. In both machine positions, the lower frame 204 is unmoved, as noted above. The upper frame 202 of the machine 200 has rotated counterclockwise (in the plane of FIG. 2) to the second position shown by the upper frame 202', by an angle of rotation, θ. As discussed above, the angle of rotation, θ, is measured using the rotational sensor 124 (not shown in FIG. 2). The rotational sensor 124 provides an accurate measurement of the angular orientation (or a change in the orientation) of the upper frame 202 relative to the lower frame 204. For instance, the angle of rotation, θ, is the difference between the angular orientations measured at the first and second time.

In the example of FIG. 2, the location, e.g., a global position, of the machine 100 is unchanged, but a state of the machine 100, has changed. Thus, in the example of FIG. 2, in the first position the machine 100 has a first state, including a first global position and a first orientation or heading. This first state is illustrated in FIG. 2 by a first machine orientation vector 210. The first state also includes a zero (linear and, perhaps, rotational) velocity, zero (linear and, perhaps, rotational) acceleration, and/or other characteristics. In some examples, a confidence value may also be associated with the first machine orientation vector 210. Without limitation, a magnitude of the first machine orientation vector may correspond to the confidence value. In the second machine position, the machine 200 has a second state including a second global position and a second orientation or heading. This second state is illustrated in FIG. 2 by a second machine orientation vector 210'. The second state also includes a zero (linear and, perhaps, rotational) velocity, zero (linear and perhaps, rotational) acceleration, and/or other characteristics. In some examples, a confidence value may also be associated with the second machine orientation vector 210'. Without limitation, a magnitude of the second machine orientation vector 210' may correspond to the confidence value.

In the second machine position, the lower frame 204 of the vehicle has not moved relative to the first state, e.g., the tracks have not caused the machine 200 to move relative to the ground in a global coordinate system. However, the GNSS sensor 208 will detect a change in location, e.g., because the GNSS sensor is coupled to the upper frame 202 and the upper frame 202 has moved, e.g., as shown by the upper frame 202', as a result of the rotation of the upper frame 202 relative to the lower frame 204. The GNSS sensor 208 is coupled to the upper frame 202 at a position spaced, e.g., in the X-Y plane, from the center of rotation 206 about which the upper frame 202 rotates relative to the lower frame 204. Because of this spacing, the GNSS sensor 208 tracks an arc about the center of rotation 206 of the upper frame 202 relative to the lower frame 204, that is, the GNSS sensor moves from the first position shown by the GNSS sensor 208 to a second position shown by the GNSS sensor 208'. As will be appreciated, as the upper frame 202 rotates from the first position to the second position, the GNSS sensor 208 registers a plurality of global positions, including at least global positions associated with the first machine state and the second machine state. Depending on the configuration of the GNSS sensor 208, e.g., the frequency at which the GNSS sensor 208 determines and/or generates a global position, the GNSS sensor 208 may also determine a plurality of global positions between the illustrated machine positions.

In the example of FIG. 2, where the rotation of the upper frame 202 relative to the lower frame 204 is the only movement of the machine 200, the orientation of the machine 200 at the second position, e.g., as indicated by the direction of second machine orientation vector 210', is the orientation of the machine at the first position, e.g., as indicated by the direction of the first machine orientation vector 210, rotated by the angle of rotation, *θ*.

In an idealized case, e.g., where there is no sensor noise or errors due to machine vibration, the global positions measured by the GNSS sensor 208 could be sufficient to determine the orientation vector 210'. Specifically, because the position of the GNSS sensor 208 on the machine 208 is known, e.g., relative to the center of rotation 206 of the machine 200 and/or relative to positions of implements on the machine 200, the GNSS sensor 208 will experience the same rotation, e.g., the angle of rotation, *θ*, as the upper frame 202 and the positions generated by the GNSS sensor 208 are on an arc at a known distance from the center of rotation 206. With two global positions generated by the GNSS sensor, two candidate centers of rotation can be determined, e.g., at an intersection of circles about the global locations, which circles have a radius equal to the distance between the center of rotation 206 and the GNSS sensor 208. A third global position measured from the GNSS sensor can triangulate the center of rotation 206, and thereby determine the direction of the machine orientation vector 210'.

While data from the GNSS sensor 208 may be sufficient to determine state information in an idealized case, real world applications are different. Specifically, even with only rotational motion, as in the example of FIG. 2, the measurements from the GNSS sensor are often noisy, owing to the GNSS technology, vibration of the machine 100 during use, and/or other factors. To overcome this noise and real-world inaccuracy, the techniques described herein can utilize the rotational data, e.g., the measured angle of rotation, θ, to accurately determine aspects of the machine orientation vector 210', including the direction of the vector.

FIG. 3 is a schematic representation illustrating position and orientation determination according to aspects of this disclosure, in more detail. Specifically, FIG. 3 illustrates a first point 302(1) and a second point 302(2) as measurements from the GNSS sensor 208 corresponding to the upper frame 202 in the first machine position and the upper frame 202' in the second machine position. FIG. 3 also shows a plurality of additional points, including a third point 302(3), a fourth point 302(4), and an Nth point 302(N), where N represents any integer greater than four. Collectively, the first point 302(1) through the Nth point 302(N), or any subset of points thereof, may be referred to herein as "the points 302." While five of the points 302 are shown in the example of FIG. 3, more or fewer points (including as few as the first point 302(1) and the second point 302(2)) may be used in other examples.

Without limitation, aspects of this disclosure use the points 302 and the angle determined by the rotational sensor, e.g., the rotation angle, *θ*, to determine the position and orientation of the machine. For example, characteristics of an expected arc 304 approximating the movement of the GNSS sensor 208 can be determined from the arrangement of the GNSS sensor 208 on the upper frame 206 and based on the measured angle of rotation, *θ*. In some aspects of this disclosure, errors of the measured points 302 in the form of offsets relative to the arc 304, e.g., lateral distances, can be determined, and an estimated center of rotation 306, corresponding to the center of rotation 206, can be determined based on these errors. In other examples, the arc 304 may be fit to the points 302, to yield an estimated center of rotation 306. For instance, techniques for determining the center of rotation can include least-square-error minimization, averaging, optimization based on model fitting, or the like. In addition, these estimation methods may provide an indication of the uncertainty around the final estimate e.g. the variance of error, median error, etc. A confidence value associated with the state estimation of the vehicle, e.g., associated with the machine orientation vector, may be based, at least in part, on this uncertainty.

Other examples for determining the estimated center of rotation 306 also are contemplated. For example, perpendicular bisectors of lines connecting adjacent pairs of the points 302 would all meet at the center-of-rotation 206 in the absence of noise. However, due to the global position points being noisy, techniques described herein can estimate a center-of-rotation for pairs of the points 302. A cluster of estimated centers, e.g., one corresponding to each pair of points, is thus generated. Techniques described herein can estimate the estimated center of rotation 306 from the cluster. This clustering can be used in connection with, or instead of the fitting described above.

In some examples, the first point 302(1) and the second point 302(2) may be more accurate than other instances of the points 302, e.g., because the machine may be stationary during the sensing of these positions. The methods described above can incorporate this as a prior belief by appropriately weighting the errors e.g. by weighting the least-square-errors from the center-of-rotation estimates obtained from the points 302(1), 302(2) and the angle of rotation, *θ*, from the rotational sensor 124 with a higher weight than other error terms.

The GNSS global position data has a certain amount of error. Accordingly, successive measurements by the GNSS sensor may spuriously indicate movement of the machine, e.g., in the absence of actual motion. For example, conventional GNSS sensor can find a global position within about 0.1 feet (e.g., about three centimeters). In some examples, the techniques described herein can determine the orientation and position of the vehicle upon receiving data about two points outside the margin of error associated with the GNSS sensor. Stated differently, although FIGS. 2 and 3 illustrated a relatively large angle of rotation, θ, this is mainly for clarity of illustration. In practice, a rotation angle, θ, of five degrees or less may be sufficient to obtain an accurate center-of-rotation using the methods described herein. The machine orientation vector can then be determined by applying the swing angle with the estimated center-of-rotation to the prior position and orientation of the machine.

In the example just described, other sensor data, such as portions of the sensor data 140, may be generated at the vehicle to confirm that no transverse movement of the machine has occurred. For example, and as discussed above, information about control inputs to the vehicle may be received by the state determination component. Specifically, when an operator of the machine inputs a control to move the machine, e.g., via a joystick, user interface, steering mechanism, or other control device, the input may be sent to a controller to cause the tracks 108 to move in some manner. In the example of FIG. 2, the state determination component may determine that no such input or instruction has been provided to move the tracks, thereby confirming that the lower frame has not moved. Other sensor data, e.g., from any of the sensors discussed above in connection with FIG. 1 or elsewhere in this document, may also be used to determine that the lower frame 204 is not moving. For example, IMUs, accelerometers, and/or other sensors coupled to the lower frame may provide information to the state determination component, which information may confirm that the lower frame has not moved (or determine an amount of movement of the lower frame 204 in other examples)

The foregoing techniques are improvements over conventional systems that require multiple GNSS sensors, e.g., at different, known locations on the upper frame 202. Other conventional systems may have a single GNSS sensor (or other type of position sensor), but require the machine to perform an extensive calibration procedure to determine a position and orientation of the machine, e.g., prior to use and/or at intervals during use. For example, a portion of this conventional calibration procedure can include causing the machine to rotate the upper frame relative to the lower frame about a relatively large angle, e.g., 30-degrees or more. Through this calibration procedure, a sufficient number of spaced global positions, over the sufficiently large angle, are used to approximate the center-of-rotation of the machine within an acceptable tolerance, e.g., by estimating an arc made by the points. However, because of the large errors associated with the global positions generated by the GNSS sensors, as noted above, the large angle and a relatively large number of positions are required to provide a machine orientation with acceptable accuracy. In contrast, aspects of this disclosure fuse information from the rotational sensor and the (single) GNSS device (and/or data from other sensors) to determine precise state information, including position and/or orientation, of the machine 200, without the need for an extensive calibration procedure. In some examples, the techniques described herein may calculate position and orientation of the machine 200 with greater accuracy and without requiring a large calibration angle. Techniques described herein may determine machine state information with an angular rotation, e.g., the angle of rotation, *θ*, of five-degrees or less. In some examples, the techniques described herein can be performed during normal operation of the machine, e.g., during performance of a task, thereby completely obviating the need for a separate calibration procedure. In other implementations, a greatly simplified calibration procedure, e.g., with a much smaller angular rotation, can greatly reduce the time needed for calibration.

Multiple measurements from the GNSS sensor may be sufficient to determine a position and orientation of the vehicle if it is known that there is no translational machine movement. Translational motion, however, may alter the expected arc 304 of the GNSS sensor 208. Aspects of this disclosure can also use additional data, e.g., from the sensor data 140, to generate a machine orientation vector in response to more complex machine movements. Without limitation, IMU data, track data, and/or the like, e.g., sensor data associated with the lower frame 204 may be used by the fusion model(s) 146 to determine an estimated path of the GNSS sensor, with measurements generated by the GNSS sensor 208 being fit to the estimated path. As noted, relatively small motions are sufficient for performing the techniques described herein, so the estimated path may not deviate far from the arc and/or the estimated arc may be isolated from other, e.g., translational, movements during operation of the machine.

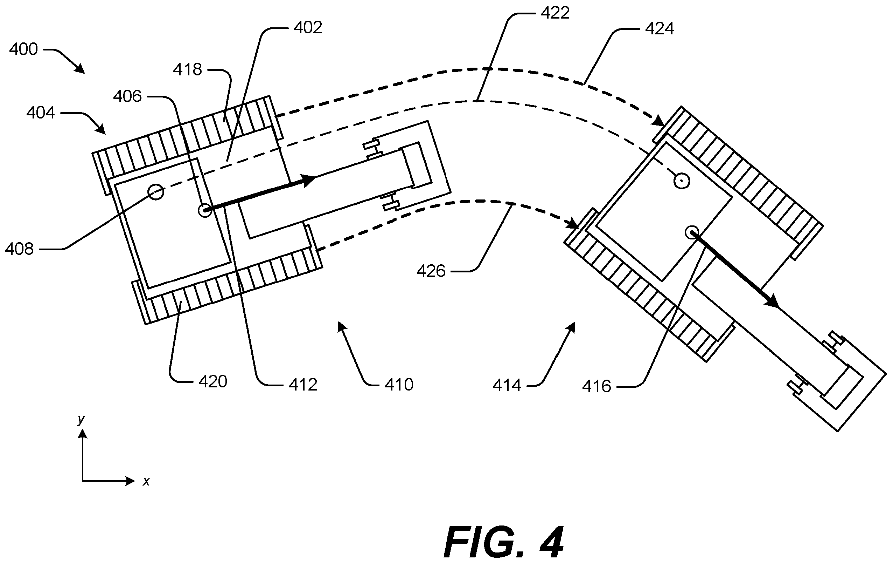

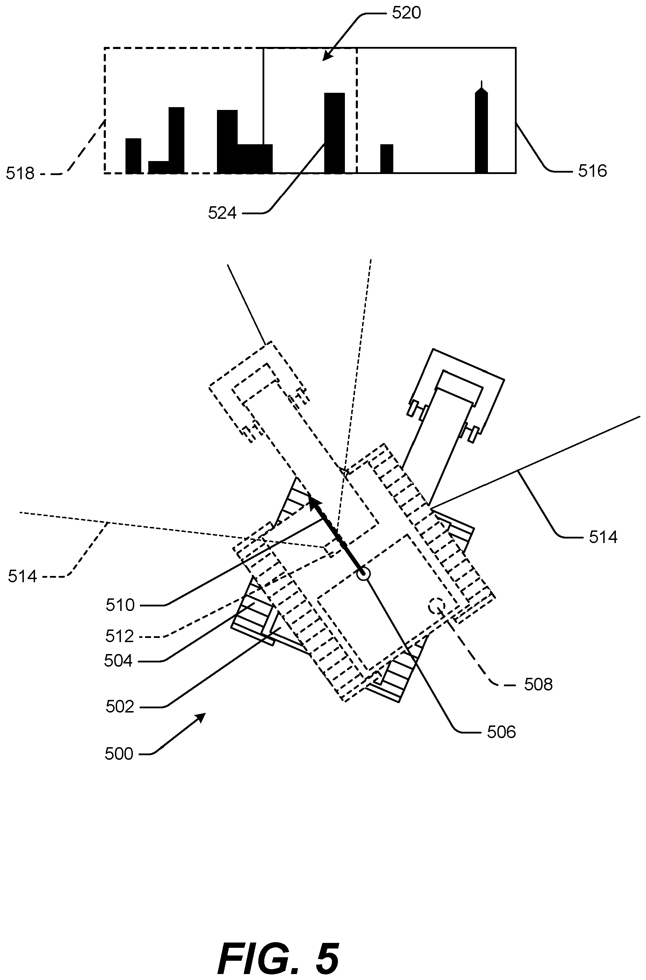

The examples of FIGS. 2 and 3, and variations described in connection with those figures, all suppose rotational motion of the upper frame 102, 202 relative to the lower frame 104, 204, with a rotational sensor 124 obtaining an accurate measurement of this rotation and generating the state data 142 based on this rotational data and global position data. However, some types of machine motion may not include this relative rotation. FIGS. 4 and 5 illustrate examples of these motions that do not include relative rotation.

Specifically, FIG. 4 is a schematic representation of a machine 400, which may be the machine 100 or the machine 200, and includes an upper frame 402 and a lower frame 404. In this example, the upper frame 402 may correspond to the upper frame 102 of the machine 100, and the lower frame 404 may correspond to the lower frame 104 of the machine 100. Moreover, the upper frame 402 may be rotatable relative to the lower frame 404, e.g., about a center of rotation 406. The center of rotation 406 may be coincident with an axis of rotation, such as the axis 106. Also shown in FIG. 4 is a GNSS sensor 408, which may be an example of the position sensor 126 discussed above in connection with FIG. 1. In the illustrated example, the lower frame 404 moves relative to the ground, but there is not relative rotation of the upper frame 402 relative to the lower frame 404, e.g., about the center of rotation 406. The machine 400 may be transiting from a first location to a second location, e.g., at a different portion of a construction site.

In the example of FIG. 4, although there is no rotation of the upper frame 402 relative to the lower frame 404, a state of the machine has changed. In the example of FIG. 4, in a first machine position 410, the machine 400 has a first state, including a first global position and a first orientation or heading. This first state is illustrated in FIG. 4 by a first machine orientation vector 412. The first state may also include a non-zero velocity, an acceleration, and/or other characteristics. In some examples, a confidence value may also be associated with the first machine orientation vector 412. Without limitation, a magnitude of the first machine orientation vector 412 may correspond to the confidence value. In a second machine position 414, the machine 400 has a second state including a second global position and a second orientation or heading. This second state is illustrated in FIG. 4 by a second machine orientation vector 416. The second state may also include a non-zero velocity, zero (linear and perhaps, rotational) acceleration, and/or other characteristics. In some examples, a confidence value may also be associated with the second machine orientation vector 416. Without limitation, a magnitude of the second machine orientation vector 416 may correspond to the confidence value.

As noted above, in the second machine position 414, the lower frame 404 of the machine 400 has moved relative to the ground. More specifically, a first track 418 and/or a second track 420, which may correspond to the first track 108a and the second track 108b, have been actuated to cause the machine 400 to move relative to the ground, in a global coordinate system. As with previous examples, the GNSS sensor 408 will generate global positions associated with the first machine position 410 and the second machine position 414 (as well as positions between the first machine position 410 and the second machine position 414), e.g., because the GNSS sensor is coupled to the upper frame 402 and the upper frame 402 is carried by the lower frame 404. However, upper frame 402 has not moved relative to the lower frame 404, so there is no expected arc to which the measured points may be compared, as in the example of FIGS. 2 and 3.

In the example of FIG. 4, other sensor data, such as types of the sensor data 140 discussed above, may be used to estimate an expected path 422 for the GNSS sensor 408. Global positions generated by the GNSS sensor 408 may then be compared to the estimated path 422. In at least some examples, the expected path 422 may be determined based at least in part on track data, e.g., from the track sensor 128 discussed above. For example, the movement of the machine 400 may result from movement of the first track 418 and/or the second track 420, according to controls input to the machine 400, e.g., by an operator, a remote controller, an autonomous control system, or otherwise. In some examples, the state determination system 138 can also determine an orientation based at least in part on information about these controls to the machine 400. The tracks 418, 420 may be independently controlled, e.g., to move relative to each other to impart desired motion of the lower frame 404 on the ground. In examples of this disclosure, information about the control of each of the tracks 418, 420 may be fused with other data to determine the expected path 422. Information about the controls can include, but is not limited to, information about user inputs, such as physical displacements of joysticks or other physical controls, electrical signals or changes in electrical signals resulting from user inputs, or the like. In other examples, the information about the controls can include information about the drive system used to move the tracks. For instance, the tracks may be driven by a hydraulic system, and information about the flow of hydraulic fluid to the tracks may be used to estimate actual movement of the tracks. In still further examples, the information about the controls can be sensor data indicative of actual movement of the tracks. For instance, track sensors can be mounted on the tracks to determine a displacement of the track(s), a rotation of hubs driving the tracks, or the like.

The information associated with the movement of the tracks may be used to approximate a translational and/or rotational movement of the machine 100. For example, the state determination system 138, e.g., using one or more of the fusion model(s) 146 can approximate a first track path 424 and/or a second track path 426. Because the location of the GNSS sensor relative to the upper frame 402 is known, the expected path 422 can be determined based on one or more of the first track path 424 and/or the second track path 426. The global position data from the GNSS sensor 408 is also available at times associated with locations along the estimated path 422. In some instances, the state determination system 138 computes a translation and three-dimensional rotation (yaw, pitch and roll) of the machine with respect to its center-of-rotation based on machine geometry, known location of the sensors, and a mapping from left/right track inputs to translation amounts for each of the sensed data above. These estimates based on individual sensors can be merged using a sensor fusion algorithm, e.g., as the fusion model(s) 146 to determine an accurate estimate of the motion of the machine 100, and the machine position and orientation can then be computed, e.g., by applying the estimated motion vector to the prior position and orientation of the machine. For example, in an embodiment, a Kalman filter or an extended Kalman filter can be used to track the center-of-rotation and the orientation of the machine using the sensor measurements as inputs.

The estimated track paths 424, 426, and thus the estimated path 422 of the GNSS sensor 408, may be prone to larger errors than the estimated arc 304 determined from the rotational sensor 124. For instance, the tracks 418, 420 may be prone to slippage, e.g. based on the terrain, soil conditions, and/or the like. As a result, the machine orientation vectors 412, 416 computed without the benefit of rotation of the upper frame 402 relative to the lower frame 404, may have a lower confidence than machine orientation vectors based at least in part on the relative rotational movement. As a result, in some implementations of this disclosure, when a machine, like the machine 400, is controlled to traverse from a first position to a second position, as in FIG. 4, the machine 400 may be controlled to impart a rotation of the upper frame 402 relative to the lower frame 404. Such controls may be operator-induced, or may be controller induced, e.g., in the absence of an input from the user. As detailed herein, even small relative rotations, e.g., on the order of about five-degrees or less, may be sufficient to implement the techniques described herein.

FIG. 5 shows additional techniques for determining state information, e.g., using additional types of sensor data. Specifically, FIG. 5 is a schematic representation of a machine 500, which may be any of the machines 100, 200, 400, and includes an upper frame 502 and a lower frame 504. In this example, the upper frame 502 may correspond to any of the upper frames 102, 202, 402, and the lower frame 504 may correspond to any of the lower frames 104, 204, 404. Moreover, as with other examples, the upper frame 502 may be rotatable relative to the lower frame 504, e.g., about a center of rotation 506. The center of rotation 506 may be coincident with an axis of rotation, such as the axis 106. Also shown in FIG. 5 is a GNSS sensor 508, which may be the position sensor 126 and/or one of the GNSS sensors 208, 408 discussed above. In the illustrated example, the lower frame 504 rotates relative to the ground, but there is no rotation of the upper frame 502 relative to the lower frame 504, e.g., about the center of rotation 406. In this example, the machine may be rotating in place, e.g., between a first orientation at which material is excavated and a second position at which the excavated material is dumped.

In the example of FIG. 5, although there is no rotation of the upper frame 502 relative to the lower frame 504, a state of the machine has changed as a result of the rotation relative to the ground. In the example of FIG. 5, in a first machine position, shown in solid lines, the machine 500 has a first state, including a first global position and a first orientation or heading. This first state may have an associated first machine orientation vector (not shown in FIG. 5). The first state may also include a velocity, an acceleration, and/or other characteristics. In some examples, a confidence value may also be associated with the first machine position. In a second machine position, shown in dashed lines, the machine 500 has a second state including a second global position (as measured by the GNSS sensor 508) and a second orientation or heading. This second state is illustrated in FIG. 5 by a machine orientation vector 510. The second state may also include a velocity, acceleration, and/or other characteristics. In some examples, a confidence value may also be associated with the machine orientation vector 510. Without limitation, a magnitude of the second machine orientation vector 510 may correspond to the confidence value.

The machine 500 also includes an imaging sensor 512, which may correspond to the sensor 130 shown in FIG. 1. In FIG. 4, the imaging sensor 512 may be a camera having a field of view 514 generally extending in front of the machine 500. The field of view 514 of FIG. 5 is for example only, as the imaging sensor 512 may have a wider or narrower field of view. Without limitation, the field of view 514 may be prone to obstruction by implements of the machine 500 so alternate fields of view, e.g., to a side or rear of the machine 500, may be preferred. In still further examples, 360-degree field of view cameras may be used, with some subsection of the full field of view being used according to the techniques described herein. Regardless of the extents of the field of view 514, the imaging sensor 512 may generate image data about an environment of the machine 500. In the example of FIG. 5, the imaging sensor 512 generates first image data 516 (shown schematically in FIG. 5) corresponding to the field of view 514 of the imaging sensor 512 with the machine 500 in the first machine position (shown by solid lines). The imaging sensor 512 also generates second image data 518 (also shown schematically in FIG. 5) corresponding to the field of view 514 of the imaging sensor 512 in the second machine position (shown by dashed lines). The first image data 516 and the second image data 518 overlap at a region 520, also shown schematically in FIG. 5.

In example of FIG. 5, as with the example of FIG. 4, there is no relative rotation measured by the rotational sensor 124 that can be used to generate an estimated arc followed by the GNSS sensor 508. However, the image data generated by the image sensor 512 may be used to estimate movement of the GNSS sensor 508. For example, the first image data 516 and the second image data 518 include images of features in the environment surrounding the machine 500. These features can include, but are not limited to buildings, transmission towers, watch towers, stationary heavy machinery, such as cranes, or the like. In examples, the first image data 516 and the second image data 518 can be analyzed to compute an angle of rotation of the camera between the captures.

In some examples, the image sensor 512 may capture a video sequence or still images at fixed time intervals as the image data, including the first image data 516 and the second image data 518. The state determination system 138 can implement one or more methods for inferring an angle of rotation of the image sensor 512 camera from the image data. In one example, points on distinctive structures, such as a building 524, in the overlapping region 520 may be determined and described using SIFT, SURF or HoG features, for example, and corresponding points in a subsequent image may be determined by matching these features. It is required that the images being matched have an overlap containing at least some of the distinctive structures, e.g. as in the overlapping region 520. The camera motion can be computed from the set of known point correspondences and the positional relationship of the camera to a point or axis about which the machine 500 pivots in the illustrated example. Moreover, because the GNSS sensor 508 has a known positional relationship relative to the image sensor 512, the state determination system 138, e.g., using the fusion model(s) 146 can determine an expected arc, as in the example of FIGS. 2 and 3, and global positions determined by the GNSS sensor 508 may be fit to the expected arc, as detailed above. In another method, a video sequence captured during the rotatory motion may be analyzed using structure-from-motion techniques using feature tracking or optic flow known in computer vision. Although the example of FIG. 5 uses an imaging sensor, the techniques just describe may be equally applicable to ranging sensors, time-of-flight sensors or the like.

FIGS. 2 and 3 illustrate techniques for determining state information using rotational data and GNSS data, e.g., from a single GNSS sensor. FIGS. 4 and 5 illustrate examples in which there is not relative rotation, so other techniques are used in conjunction with a single GNSS sensor to estimate the state, including orientation and/or position. As will be appreciated, this disclosure is not limited to using the track data as in FIG. 4 and/or the image data as in FIG. 5 in the absence of available rotational data. Instead, the varied techniques described herein may be used together, e.g., using the fusion model(s) 146. As more data types and models are used, estimation techniques may become more robust. For instance, while the rotational sensor 124 may generate data with the highest accuracy, track data and/or image data, while less accurate, may still be used to determine the state data 142. In examples, the different types of data may be weighted differently.

Insofar as Figs. 1-5 and the foregoing disclosure involve a GNSS sensor disposed on the upper frame of a machine, it will be appreciated that, alternatively, the GNSS sensor could be provided on the lower frame of the machine, with at least some of the other sensors conversely being provided on the upper frame. Moreover, as detailed above, the GNSS sensor is only one example of a position sensor, and other types of position sensors may be used in place of the GNSS sensors used in examples described herein.

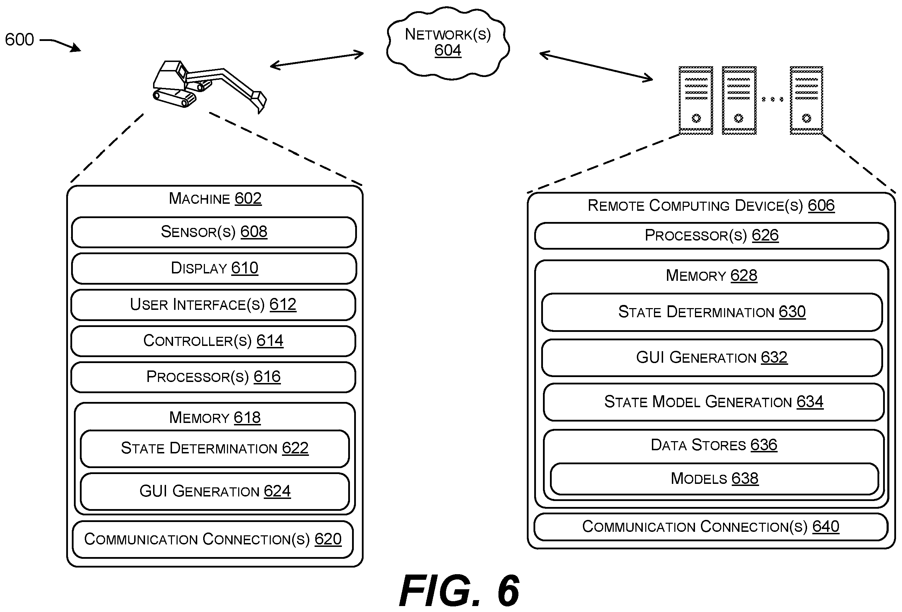

FIG. 6 is a diagram illustrating an example system 600 for determining a machine state in accordance with implementations described herein. In at least one example, the system 600 can include one or more machine(s) 602 communicating over one or more networks 604 with one or more remote computing device(s) 606. The machine 602 may be any of the machines 100, 200, 400, 500, for example. The remote computing device(s) 606 may include tablet computing devices, desktop computing devices, laptop computing devices, mobile computing devices, cloud-based computing devices, server-based computing devices, or any other computing device capable of performing functionality described herein and communicating with the machine 602. The network(s) 604 may include a local area network (LAN), a wide area network (WAN), including but not limited to the Internet, or any combination thereof, and may include both wired and wireless communication technologies using any suitable protocols and communication techniques.

The system 600 can include one or more sensors 608, a display 610, one or more user interfaces 612, one or more controller 614, processor(s) 616, memory 618 communicatively coupled with the processor(s) 616, and one or more communication connections 620. In the illustrated example, the memory 618 of the machine 602 stores a state determination component 622 and a graphical user interface (GUI) generation system 624. Although these systems are illustrated as, and will be described below as, separate components, functionality of the various systems may be attributed differently than discussed. Moreover, fewer or more systems and components may be utilized to perform the various functionalities described herein. Though depicted in FIG. 6 as residing in the memory 618 for illustrative purposes, it is contemplated that the state determination component 622 and/or the GUI generation system 624 may additionally, or alternatively, be accessible to the machine 602 (e.g., stored on, or otherwise accessible by, memory remote from the machine 602).

The sensor(s) 608 can include any sensors described herein. For example, and without limitation, the sensor(s) 608 can include the rotational sensor 124, position sensor 126, the track sensors 128, the sensors 130 and/or other sensors discussed herein. Without limitation, the sensor(s) 608 can be configured to generate data about aspects of the machine 602 and/or about an environment of the machine 602.

The user interface(s) 612 may be provided to an operator of the machine 602, e.g., to allow a user to interact with the machine 602. In some examples, the user interface(s) 612 are accessible by an operator of the machine 602 when the operator is in the cab 110. The user interface(s) 612 can include display screens, touch screens, joysticks, steering wheels, switches, pedals, and/or any other mechanism or component with which the operator can interface.

The controller(s) 614 can include components that implement control signals. Without limitation, the controller(s) 614 may receive signals based on operator inputs received via the user interface(s) 612 and determine actions to implement those controls. The controller(s) 614 may include hydraulic controllers, actuator controllers, electronic controllers, or the like. In some instances, data from the user interface(s) 612 and/or the controller(s) 614 may be used to infer machine motion, as detailed further herein.

In at least one example, the state determination component 622 can include functionality to determine a state data for the machine 602 based on the sensor inputs. For example, the state determination component 622 may be substantially the same as the state determination system 138 discussed above. In examples, the state determination component 622 can receive sensor data from a rotational sensor and from a single GNSS sensor and determine an orientation of the machine 602 based on that information. For example, the state determination component 622 may utilize one or more models, e.g., the fusion models 140 discussed above.

In some examples, the GUI generation system 624 can include functionality to generate one or more interactive interfaces, such as for presentation via the display 610. In some examples, the GUI generation system 624 may receive information from the state determination component 622 to generate the GUIs. In some examples, the GUIs may illustrate the machine 602 and information about the state of the information. The state information may include a machine orientation vector. The GUIs may also present to an operator a confidence value associated with the state information. As discussed herein, state information determined using rotational data from the rotational sensor may be more accurate than state data determined using other techniques. This accuracy may be illustrated to an operator via a GUI.

The communication connection(s) 620 enable communication between the machine 602 and the remote computing device(s) 606 and/or other local or remote device(s). For instance, the communication connection(s) 620 can facilitate communication with the remote computing device(s) 606, such as via the network(s) 604. The communication connection(s) 620 can enable Wi-Fi-based communication such as via frequencies defined by the IEEE 802.11 standards, short range wireless frequencies such as BLUETOOTH^{®}, other radio transmission, or any suitable wired or wireless communications protocol that enables the respective computing device to interface with the other computing device(s).

In some implementations, the machine 602 can send information, such as instructions to generate GUIs, sensor data, or the like to the remote computing device(s) 606, via the network(s) 604. The remote computing device(s) 606 can receive such information from the from the machine 602 via the communication connections 620, 640. In some implementations, the remote computing device(s) 606 can perform some of the functions attributed to the machine 602, including determining the state of the machine 602 or generating the GUIs, for example. In at least one example, the remote computing device(s) 606 can include one or more processors 626 and memory 628 communicatively coupled with the processor(s) 626. In the illustrated example, the memory 628 of the remote computing device(s) 606 may store a state determination component 630, a GUI generation component 632, a state model generation component 634, and/or include data stores 636. In examples, the state determination component 630 can be substantially the same as the state determination component 622 and the GUI generation component 632 can be substantially the same as the GUI generation component 624.

The state model generation component 634 can include functionality to generate one or more models, e.g., including the fusion model(s) 140 discussed above. Without limitation, the state model generation component 634 can implement one or more training processes, e.g., to train a machine learning model, to generate state information from various sensor inputs. Moreover, the state model generation component 634 can also include functionality to model aspects described herein, such as an estimated path for the GNSS sensor, the center of gravity, and/or other machine components.

The data stores 636 can include models 638, which can include the fusion model(s) 146 in some instances. The data stores 636 may also store machine specific information, machine-specific models, and/or other data used to determine aspects of state determination, as described herein.

The remote computing device(s) 606 may also include communication connection(s) 640 that enable communication between the remote computing device(s) 606 and other local or remote device(s). For instance, the communication connection(s) 640 can facilitate communication with the machine 602 and/or other machines, such as via the network(s) 604. The communications connection(s) 640 can enable Wi-Fi-based communication such as via frequencies defined by the IEEE 802.11 standards, short range wireless frequencies such as BLUETOOTH^{®}, other radio transmission, or any suitable wired or wireless communications protocol that enables the respective computing device to interface with the other computing device(s).

The processor(s) 616 of the machine 602 and the processor(s) 626 of the remote computing device(s) 606 can be any suitable processors capable of executing instructions to process data and perform operations as described herein. By way of example and not limitation, the processor(s) 616, 626 can comprise one or more Central Processing Units (CPUs), Graphics Processing Units (GPUs), or any other device or portion of a device that processes electronic data to transform that electronic data into other electronic data that can be stored in registers and/or memory. In some examples, integrated circuits (e.g., ASICs, etc.), gate arrays (e.g., FPGAs, etc.), and other hardware devices can also be considered processors in so far as they are configured to implement encoded instructions.

The memory 618 and the memory 628 are examples of non-transitory computer-readable media. The memory 618, 628 can store an operating system and one or more software applications, instructions, programs, and/or data to implement the methods described herein and the functions attributed to the various systems. In various implementations, the memory can be implemented using any suitable memory technology, such as static random-access memory (SRAM), synchronous dynamic RAM (SDRAM), nonvolatile/Flash-type memory, or any other type of memory capable of storing information. The architectures, systems, and individual elements described herein can include many other logical, programmatic, and physical components, of which those shown in the accompanying figures are merely examples that are related to the discussion herein.

Although various systems and components are illustrated as being discrete systems, the illustrations are examples only, and more or fewer discrete systems may perform the various functions described herein. Moreover, functionality ascribed to the machine 602 may be performed at the remote computing device(s) 606 and/or functionality ascribed to the remote computing device(s) 606 may be performed at the machine 602.

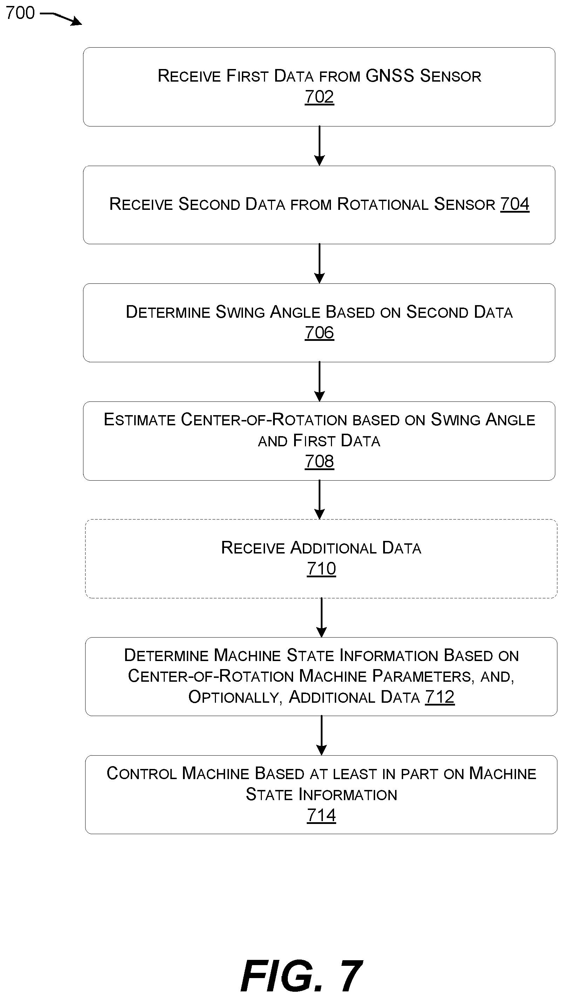

FIG. 7 illustrates a flow chart depicting an example process 700, of the present disclosure, which may be related to determining a machine state, as descried herein. The example process 700 is illustrated as a collection of steps in a logical flow diagram, which steps represent acts or operations that can be implemented in hardware, software, or a combination thereof. In the context of software, the steps represent computer-executable instructions stored in memory. When such instructions are executed by, for example, processor(s), such instructions may cause the processor(s) and/or various components of a computing device or a machine including or associated with a computing device, to perform the recited acts or operations. Generally, computer-executable instructions include routines, programs, objects, components, data structures, and the like that perform particular functions or implement particular abstract data types. The order in which the operations are described is not intended to be construed as a limitation, and any number of the described blocks can be combined in any order and/or in parallel to implement the processes. In some embodiments, one or more blocks of the process can be omitted entirely. Moreover, the process 700 can be combined in whole or in part with other methods.

In more detail, FIG. 7 shows an exemplary process 700 for determining a state of a machine, such as the machine 100, 200, 400, 500, and controlling the machine based on the state, e.g., to perform an excavating task. The process 700 may be performed by the state determination system(s)/component(s) 138, 622, 630 and/or the machine(s) 100, 200, 400, 500, 602, although other components may perform some or all of the operations of the process 700. In addition, the operations of the process 700 need not necessarily be performed in the order shown in FIG. 7, and may be performed in different orders consistent with the disclosed embodiments.

At operation 702, the process 700 includes can include receiving first data from a GNSS sensor. For example, the state determination system 138 may receive sensor data generated by the position sensor 126 as the machine 100 is used to perform one or more tasks. In examples, the first data includes a plurality of global positions generated by a GNSS sensor as the machine 100 moves. The GNSS sensor may be coupled to an upper frame 102 of the machine 100 at a position spaced from an axis about which the upper frame 102 rotates. Thusly disposed, the GNSS sensor will move, and thus generate new global positions, in response to most machine movements.

At operation 704, the process 700 includes receiving second data from a rotational sensor. For example, the state determination system 138 may receive sensor data generated by the rotational sensor 124 as the machine 100 is used to perform one or more tasks. In examples, the second data includes a rotational displacement of the upper frame 102 of the machine relative to the lower frame 104 of the machine 100. The rotational sensor 124 may be configured to determine an angular displacement of the upper frame 102 relative to the lower frame 104 about the axis 106. The rotational sensor 124 may determine the rotational displacement with a high degree of accuracy, e.g., within about 0.1 degrees.

At operation 706, the process 700 includes determining a swing angle based on the second data. As noted above, the rotational sensor 124 determines an angular displacement about the rotational axis 106. The swing angle may be an absolute angle, a relative angle, or other angular measurement. In the example of FIG. 2, the swing angle may be the angle of rotation, *θ*.

At operation 708, the process 700 includes estimating a center-of-rotation based on the swing angle and the first data. As discussed above in association with the example of FIGS. 2 and 3, aspects of this disclosure include determining state information using GNSS data and rotational data. For example, the swing angle may be used to determine an expected arc of the GNSS sensor, because the location of the GNSS sensor relative to a center of rotation is known. The global positions determined by the GNSS sensor may be compared to the estimated arc to determine the estimated center of gravity, as discussed above. Other example techniques for determining the estimated center-of-rotation also are described herein.

At operation 710, the process 700 can optionally include receiving additional data. The additional data can be any of the sensor data 140 discussed above and/or other information associated with the machine and/or movement of the machine. In some instances, the additional data can include, or can be used to generate, the track data and/or the image data discussed above in connection with FIGS. 4 and 5, respectively.

At operation 712, the process 700 includes determining machine state information based on the estimated center-of-rotation, machine parameters, and, optionally, the additional data. For example, the machine state information can include position, location, orientation, velocity, acceleration, and/or other information associated with aspects of the machine 100. Without limitation, the machine state information may be a machine orientation vector indicating a position and orientation of the machine. In examples, once the estimated center of rotation is determined, a known spatial relationship between components of the machine, such as the GNSS sensor, the center of gravity, the tracks, and/or other sensors, may be used to determine the direction of the machine. The additional data may be fused with the sensor data to determine the estimated center of gravity, to confirm assumptions about movement of the vehicle (e.g., an absence of lateral movement), and/or for other purposes detailed herein.

At operation 714, the process 700 includes controlling a machine based at least in part on the machine state information. For example, the machine 100 may be used to performing excavation tasks, including but not limited to digging, grading, or the like. In some examples, these operations may be aided using a three-dimensional model of the terrain to be excavated. The machine state, including the orientation of the machine may be required to perform operations according to the model. In other instances, the operation 714 can include generating a GUI for display to an operator, a site manager, or other user associated with the machine.

### Industrial Applicability

The disclosed systems and methods find application in any environment in which state data of a machine may be necessary, e.g., for control of the machine, localization of the machine, or the like. In implementations, the state determination can be characterized at least in part as a machine orientation vector. For instance, the state may be based on rotational sensor data associated with a relative rotation of portions of the machine and global positions generated by a GNSS sensor. The disclosed systems and methods allow for more accurate state determination, and in some instances without the need for involved and cumbersome calibration and/or re-calibration routines. For example, the techniques described herein may reduce the time for performing calibration and re-calibration, including during the performance of tasks using the machine.

For example, and with reference to FIG. 1, a machine 100 includes an upper frame 102 rotatable relative to a lower frame 104 about a axis 106. A rotational sensor 124 is disposed to determine relative angular displacements between the upper frame 102 and the lower frame 104. A three-dimensional position sensor 126, e.g., a GNSS sensor, also is coupled to the upper frame 102, at a position spaced from the axis 106. Additional sensors, including but not limited to a track sensor 128, an imaging sensor, e.g., as the sensor 130, and/or implement sensors 132, 134, 136 may also be disposed on the machine 100. A state determination system 138, operating as a computing system associated with the machine 100, may receive sensor data from some or all of the sensors and generated state data 142, e.g., by applying one or more fusion model(s) 146. In examples, the state determination system 138 can estimate movement of the machine 100 based on the rotational data from the rotational sensor 124, track data from the track sensors 128, image data from the imaging sensors 130 and/or other sensor data, and compare global positions sensed by the position sensor 126 to the estimated path. For example, the comparison may identify an estimated center of rotation of the machine and using the known relationship of the position sensor 126 to the center of rotation, an orientation of the machine 100 can be determined.

Techniques described herein may improve efficiency at work sites and/or improve efficiency of machines, like the machine 100. By way of example and not limitation, techniques described herein can determine machine state information, including orientation of a machine, in the absence of frequent, involved, and/or disruptive calibration routines, which can lead to more efficient use of the machine 100, including but not limited to reduced fuel consumption and/or wear of parts. For instance, when an operator has to perform a calibration routine to determine machine state, the machine is not available to be used for productive operational tasks. Aspects of this disclosure may determine state information about the machine during performance of tasks, thereby increasing throughput of work and reducing wear on machine components caused by non-work-related use.

One having ordinary skill in the art will appreciate the computer programs for implementing the disclosed techniques may be stored on and/or read from computer-readable storage media. The computer-readable storage media may have stored thereon computer-executable instructions which, when executed by a processor, cause the computer to perform, among other things the processes disclosed herein. Exemplary computer-readable storage media may include magnetic storage devices, such as a hard disk, a floppy disk, magnetic tape, or other magnetic storage device known in the art; optical storage devices, such as CD-ROM, DVD-ROM, or other optical storage devices known in the art; and/or electronic storage devices, such as E PROM, a flash drive, or another integrated circuit storage device known in the art. The computer-readable storage media may be embodied by one or more components of the machine 100.

## Claims

1. A system (100, 200, 300, 400, 600) comprising:
a machine (100, 200, 300, 400, 602) having a lower frame (104) and an upper frame (102) movable relative to the lower frame (104);
a three-dimensional position sensor (126) disposed on the upper frame (102) or the lower frame (104) at a position spaced from an axis of rotation (106) of the upper frame (102) relative to the lower frame (104);
an additional sensor (124, 128, 130) coupled to the machine (100);
one or more processors; and
memory storing executable instructions that, when executed by the one or more processor, cause the machine to perform actions comprising:
receiving, from the additional sensor (124, 128, 130), first sensor data associated with a first machine position and second sensor data associated with a second machine position different from the first machine position;
determining based at least in part on the first sensor data and the second sensor data, an estimated motion of the machine (100) between the first machine position and the second machine position;
receiving, from the three-dimensional position sensor (126), a plurality of global positions associated with the machine; and
determining, based at least in part on the plurality of global positions associated with the machine and the estimated motion of the machine, an orientation (144) of the machine (100) in the second machine position,
wherein the additional sensor comprises a rotational sensor (124) configured to determine a rotation of the upper frame 106) relative to the lower frame (108), wherein the determining the orientation (144) of the machine (100) comprises:
determining, based at least in part on an angular displacement sensed by the rotational sensor, an estimated arc of the three-dimensional position sensor as the estimated motion;
comparing the plurality of global positions to the estimated arc; and
determining, based on the comparing, an estimated center of rotation of the machine.

2. The system of (100, 200, 300, 400, 600) claim 1, wherein the additional sensor comprises a track sensor (128) configured to generate data associated with movement of tracks (108) associated with the machine (100), wherein the determining the orientation (144) of the machine comprises:
receiving track data from the track sensor (128);
determining, based at least in part on the track data, an estimated path as the estimated motion; and
comparing the plurality of global positions to the estimated path; and
determining, based on the comparing, an estimated center of rotation of the machine.

3. The system (100, 200, 300, 400, 600) of claim 1 or claim 2, wherein the additional sensor comprises an imaging sensor (130) or a ranging sensor and the determining the orientation (144) of the machine comprises:
receiving, from the additional sensor, first image data (516) and second image data (518);
determining the estimated motion of the three-dimensional position sensor based at least in part on a difference between the first image data and the second image data; and
comparing the plurality of global positions to the estimated motion,
wherein the orientation of the machine is based at least in part on an error associated with the comparing the plurality of global positions to the estimated motion.

## Patentansprüche

1. System (100, 200, 300, 400, 600), umfassend:
eine Maschine (100, 200, 300, 400, 602), die einen unteren Rahmen (104) und einen oberen Rahmen (102), der relativ zu dem unteren Rahmen (104) beweglich ist, aufweist;
einen dreidimensionalen Positionssensor (126), der an dem oberen Rahmen (102) oder dem unteren Rahmen (104) an einer Position, die von einer Rotationsachse (106) des oberen Rahmens (102) relativ zu dem unteren Rahmen (104) beabstandet ist, angeordnet ist;
einen zusätzlichen Sensor (124, 128, 130), der an die Maschine (100) gekoppelt ist;
einen oder mehrere Prozessoren; und
einen Speicher, der ausführbare Anweisungen speichert, die, wenn sie durch den einen oder die mehreren Prozessoren ausgeführt werden, die Maschine veranlassen, Aktionen durchzuführen, umfassend:
Empfangen erster Sensordaten, die mit einer ersten Maschinenposition assoziiert sind, und zweiter Sensordaten, die mit einer zweiten Maschinenposition assoziiert sind, die sich von der ersten Maschinenposition unterscheidet, von dem zusätzlichen Sensor (124, 128, 130);
Bestimmen, basierend mindestens teilweise auf den ersten Sensordaten und den zweiten Sensordaten, einer geschätzten Bewegung der Maschine (100) zwischen der ersten Maschinenposition und der zweiten Maschinenposition;
Empfangen einer Vielzahl von mit der Maschine assoziierten globalen Positionen von dem dreidimensionalen Positionssensor (126); und
Bestimmen, basierend mindestens teilweise auf der Vielzahl von mit der Maschine assoziierten globalen Positionen und der geschätzten Bewegung der Maschine, einer Ausrichtung (144) der Maschine (100) in der zweiten Maschinenposition,
wobei der zusätzliche Sensor einen Rotationssensor (124), der konfiguriert ist, um eine Rotation des oberen Rahmens (106) relativ zu dem unteren Rahmen (108) zu bestimmen, umfasst, wobei das Bestimmen der Ausrichtung (144) der Maschine (100) umfasst:
Bestimmen, basierend mindestens teilweise auf einer durch den Rotationssensor erfassten Winkelverschiebung, eines geschätzten Bogens des dreidimensionalen Positionssensors als die geschätzte Bewegung;
Vergleichen der Vielzahl von globalen Positionen mit dem geschätzten Bogen; und
Bestimmen, basierend auf dem Vergleichen, eines geschätzten Rotationspunkts der Maschine.

2. System (100, 200, 300, 400, 600) nach Anspruch 1, wobei der zusätzliche Sensor einen Gleiskettensensor (128), der konfiguriert ist, um Daten zu erzeugen, die mit der Bewegung von Gleisketten (108) assoziiert sind, die mit der Maschine (100) assoziiert sind, umfasst, wobei das Bestimmen der Ausrichtung (144) der Maschine umfasst:
Empfangen von Gleiskettendaten von dem Gleiskettensensor (128);
Bestimmen, basierend mindestens teilweise auf den Gleiskettendaten, eines geschätzten Pfads als die geschätzte Bewegung; und
Vergleichen der Vielzahl von globalen Positionen mit dem geschätzten Pfad; und
Bestimmen, basierend auf dem Vergleichen, eines geschätzten Rotationspunkts der Maschine.

3. System (100, 200, 300, 400, 600) nach Anspruch 1 oder 2, wobei der zusätzliche Sensor einen Bildgebungssensor (130) oder einen Entfernungsmesssensor umfasst und das Bestimmen der Ausrichtung (144) der Maschine umfasst:
Empfangen erster Bilddaten (516) und zweiter Bilddaten (518) von dem zusätzlichen Sensor;
Bestimmen der geschätzten Bewegung des dreidimensionalen Positionssensors basierend mindestens teilweise auf einem Unterschied zwischen den ersten Bilddaten und den zweiten Bilddaten; und
Vergleichen der Vielzahl von globalen Positionen mit der geschätzten Bewegung,
wobei die Ausrichtung der Maschine mindestens teilweise auf einem Fehler, der mit dem Vergleichen der Vielzahl von globalen Positionen mit der geschätzten Bewegung assoziiert ist, basiert.

## Revendications

1. Système (100, 200, 300, 400, 600) comprenant :
une machine (100, 200, 300, 400, 602) ayant un cadre inférieur (104) et un cadre supérieur (102) mobile par rapport au cadre inférieur (104) ;
un capteur de position tridimensionnel (126) disposé sur le cadre supérieur (102) ou le cadre inférieur (104) à une position espacée d'un axe de rotation (106) du cadre supérieur (102) par rapport au cadre inférieur (104) ;
un capteur supplémentaire (124, 128, 130) couplé à la machine (100) ;
un ou plusieurs processeurs ; et
une mémoire stockant des instructions exécutables qui, lorsqu'elles sont exécutées par le ou les processeurs, amènent la machine à réaliser des actions comprenant :
la réception, à partir du capteur supplémentaire (124, 128, 130), de premières données de capteur associées à une première position de machine et de secondes données de capteur associées à une seconde position de machine différente de la première position de machine ;
la détermination, sur la base, au moins en partie, des premières données de capteur et des secondes données de capteur, d'un mouvement estimé de la machine (100) entre la première position de machine et la seconde position de machine ;
la réception, à partir du capteur de position tridimensionnel (126), d'une pluralité de positions globales associées à la machine ; et
la détermination, sur la base, au moins en partie, de la pluralité de positions globales associées à la machine et du mouvement estimé de la machine, d'une orientation (144) de la machine (100) dans la seconde position de machine,
dans lequel le capteur supplémentaire comprend un capteur de rotation (124) configuré pour déterminer une rotation du cadre supérieur (106) par rapport au cadre inférieur (108), dans lequel la détermination de l'orientation (144) de la machine (100) comprend :
la détermination, sur la base, au moins en partie, d'un déplacement angulaire détecté par le capteur de rotation, d'un arc estimé du capteur de position tridimensionnel en tant que mouvement estimé ;
la comparaison de la pluralité de positions globales à l'arc estimé ; et
la détermination, sur la base de la comparaison, d'un centre de rotation estimé de la machine.

2. Système (100, 200, 300, 400, 600) selon la revendication 1, dans lequel le capteur supplémentaire comprend un capteur de chenilles (128) configuré pour générer des données associées au mouvement de chenilles (108) associées à la machine (100), dans lequel la détermination de l'orientation (144) de la machine comprend :
la réception de données de chenilles provenant du capteur de chenilles (128) ;
la détermination, sur la base, au moins en partie, des données de chenilles, d'une trajectoire estimée en tant que mouvement estimé ; et
la comparaison de la pluralité de positions globales à la trajectoire estimée ; et
la détermination, sur la base de la comparaison, d'un centre de rotation estimé de la machine.

3. Système (100, 200, 300, 400, 600) selon la revendication 1 ou la revendication 2, dans lequel le capteur supplémentaire comprend un capteur d'imagerie (130) ou un capteur de télémétrie et la détermination de l'orientation (144) de la machine comprend :
la réception, à partir du capteur supplémentaire, de premières données d'image (516) et de secondes données d'image (518) ;
la détermination du mouvement estimé du capteur de position tridimensionnel, sur la base, au moins en partie, d'une différence entre les premières données d'image et les secondes données d'image ; et
la comparaison de la pluralité de positions globales au mouvement estimé,
dans lequel l'orientation de la machine est basée, au moins en partie, sur une erreur associée à la comparaison de la pluralité de positions globales au mouvement estimé.
